# EUROPÄISCHE PATENTSCHRIFT

(11) **EP 2 027 580 B1**
(45) Veröffentlichungstag und Bekanntmachung des Hinweises auf die Patenterteilung: **17.06.2009**
(21) Anmeldenummer: 07725519.8
(22) Anmeldetag: 24.05.2007
(51) Int. Cl.: G10K 9/22, G01S 7/521, G01S 15/93

(54) **ULTRASCHALLSENSOR, INSBESONDERE KRAFTFAHRZEUG-ULTRASCHALLSENSOR**
ULTRASOUND SENSOR, IN PARTICULAR, A MOTOR VEHICLE ULTRASOUND SENSOR
CAPTEUR À ULTRASONS, NOTAMMENT CAPTEUR À ULTRASONS DE VÉHICULE AUTOMOBILE

(30) Priorität: 14.06.2006 DE 102006028214
(43) Veröffentlichungstag der Anmeldung: 25.02.2009
(73) Patentinhaber: Valeo Schalter und Sensoren GmbH, 74321 Bietigheim-Bissingen (DE)
(72) Erfinder: WEHLING, Hans-Wilhelm, 74074 Heilbronn (DE); KUPFERNAGEL, Uwe, 71665 Vaihingen (DE); GRÜDL, Dietmar, 71679 Asperg (DE); JUNG, Thomas, 74074 Heilbronn (DE); GOTZIG, Heinrich, 74081 Heilbronn (DE)
(86) Internationale Anmeldenummer: PCT/EP2007/004621
(87) Internationale Veröffentlichungsnummer: WO 2007/144065

(56) Entgegenhaltungen:
- EP-A- 1 260 965
- DE-A1- 19 752 921
- DE-A1- 19 937 195

## Beschreibung

Die Erfindung betrifft einen Ultraschallsensor, insbesondere einen Kraftfahrzeug-Ultraschallsensor, mit einem Gehäuse, mit einer in oder an einem Abschnitt des Gehäuses gelagerten Membran, und mit einem Entkopplungselement, das sich zumindest abschnittsweise zwischen der Membran und dem Gehäuseabschnitt erstreckt.

Die Membran eines solchen Ultraschallsensors weist üblicherweise einen Membranboden auf, der mit Hilfe eines Piezo-Elements in Schwingungen versetzt werden kann, so dass in die Umgebung des Ultraschallsensors Ultraschallsignale abgestrahlt werden können. Von Hindernissen reflektierte Ultraschallsignale können von dem Ultraschallsensor wieder empfangen und verarbeitet werden.

Um ein definiertes Schwingen der Membran beziehungsweise des Membranbodens zu erreichen, ist die Membran nicht unmittelbar mit dem Gehäuse des Ultraschallsensors verbunden, sondern von einem Entkopplungsmaterial umgeben, das nach radial außen an einen ringförmigen Gehäuseabschnitt des Ultraschallsensorgehäuses grenzt.

Aus Vorbenutzungen ist ein Ultraschallsensor bekannt, dessen ringförmiger Gehäuseabschnitt Anspritzöffnungen aufweist, die genutzt werden, um eine in den ringförmigen Gehäuseabschnitt eingelegte Membran mit Entkopplungsmaterial zu umspritzen. Wenn folgende Fertigungsschritte, bspw. die Befestigung des Piezo-Elements an dem Membranboden, nicht fehlerfrei durchgeführt werden können, hat dies zur Folge, dass ein vollständig oder fast vollständig hergestellter Ultraschallsensor als Ausschuss entsorgt werden muss.

Aus der DE 199 37 195 A1 ist ein Ultraschallsensor für Kraftfahrzeuge mit einer in einem zugehörigen Gehäuse gelagerten Membran bekannt, wobei zwischen Membran und Gehäuse ein gummielastisches Entkopplungselement vorgesehen ist. Zur Verbindung mit dem Gehäuse weist das Entkopplungselement an seinem Außenumfang einen umlaufenen Ringbund auf, der in einer korrespondierenden Rille des Gehäuses einrastet.

Hiervon ausgehend liegt der vorliegenden Erfindung die Aufgabe zugrunde, einen Ultraschallsensor bereitzustellen, der möglichst preisgünstig herstellbar ist.

Diese Aufgabe wird gemäß Anspruch 1 erfindungsgemäß dadurch gelöst, dass entlang des Umfangs des Gehäuseabschnitts und des Entkopplungselements mehrere Rastmittel vorgesehen sind, wobei die Rastmittel an dem Entkopplungselement vorgesehene Rastkörper sowie Rastaufnahmen umfassen, welche durch Öffnungen in dem Gehäuseabschnitt gebildet sind.

Der erfindungsgemäße Ultraschallsensor ermöglicht eine sehr flexible und damit preisgünstige Fertigung. Das Entkopplungselement kann separat bereitgestellt werden und somit in einfacher Art und Weise in einen Montageprozess eingebunden werden. Kommt es bei folgenden Fertigungsschritten, beispielsweise bei dem Einkleben des Piezo-Elements in die Membran, zu Fehlern, können die bereits entstandenen Baugruppen wieder aufgelöst werden, insbesondere das Entkopplungselement und das Gehäuse wiederverwertet werden. Das separat bereitgestellte Entkopplungselement bietet zudem die Möglichkeit, bereits vor der Montage des Ultraschallsensors farblich angepasst, beispielsweise lackiert zu werden.

Ein weiterer Vorteil des separat bereitgestellten Entkopplungselements ist die Tatsache, dass dieses weniger konstruktionstechnischen Zwängen unterliegt, da es nicht durch Umspritzen von angrenzenden Bauteilen entsteht, sondern in einem separaten Spritzvorgang hergestellt werden kann.

Die Erfindung sieht vor, dass die Rastmittel die Elemente Rastkörper und Rastaufnahme aufweisen, wobei eines der Elemente an dem Entkopplungselement und das andere der Elemente an dem Gehäuseabschnitt vorgesehen ist. Selbstverständlich ist es auch möglich, die genannten Alternativen miteinander zu kombinieren, so dass an dem Entkopplungselement und an dem Gehäuseabschnitt jeweils Rastkörper und Rastaufnahmen vorgesehen sind, die mit zugehörigen Rastaufnahmen und Rastkörpern zusammenwirken. Im Rahmen dieser Erfindung wird unter einem Rastmittel ein solches Mittel verstanden, das einer Demontage des Ehtkopplungselements aus dem Gehäuseabschnitt einen zumindest geringfügigen Widerstand entgegensetzt, so dass das Entkopplungselement sicher an dem Gehäuseabschnitt gehalten ist.

Für eine möglichst sichere Befestigung des Entkopplungselements an dem Gehäuseabschnitt sind entlang des Umfangs des Gehäuseabschnitts und des Entkopplungselements mehrere Rastmittel vorgesehen die insbesondere gleichmäßig entlang des Umfangs des Gehäuseabschnitts und des Entkopplungselements verteilt sind.

Für eine gute Entkopplung zwischen Membran und Gehäuse ist es vorteilhaft, wenn der Gehäuseabschnitt und das Entkopplungselement ringförmig ausgebildet sind. Somit kann die Membran in einer zur Abstrahlrichtung des Ultraschallsensors senkrechten Ebene schwingungstechnisch von dem Gehäuse entkoppelt werden.

Nach einer besonders bevorzugten Ausführungsform der Erfindung ist vorgesehen, dass das Entkopplungselement in einer Montagerichtung in den Gehäuseabschnitt einsetzbar ist, die zur Abstrahlrichtung des Ultraschallsensors entgegengesetzt ist. Dies hat den Vorteil, dass das Gehäuse des Ultraschallsensors relativ schlank bauen kann, da das Entkopplungselement nur in den genannten Gehäuseabschnitt des Gehäuses des Ultraschallsensors eingesetzt werden muss. Somit ist es nicht erforderlich, das Entkopplungselement von der Rückseite her durch das Gehäuse zu führen. Auf diese Weise kann in dem dem Gehäuseabschnitt abgewandten Bereich des Gehäuses Platz für weitere Bauelemente, beispielsweise Leiterplatten oder elektrische Anschlusselemente geschaffen werden.

Eine weitere vorteilhafte Ausführungsform der Erfindung sieht vor, dass das Entkopplungselement und/oder der Gehäuseabschnitt zumindest einen sich relativ zur Montagerichtung verjüngenden Einführabschnitt aufweist. Mit Hilfe dieses Einführabschnitts wird das Fügen von Entkopplungselement und Gehäuseabschnitt erleichtert, da sich das Entkopplungselement und der Gehäuseabschnitt während des Fügevorgangs mit Hilfe des Einführabschnitts relativ zueinander ausrichten können.

Eine Weiterbildung der Erfindung sieht vor, dass an dem Entkopplungselement mindestens ein Anschlagelement ausgebildet ist, das mit einer an dem Gehäuse oder dem Gehäuseabschnitt ausgebildeten Anschlagfläche zusammenwirkt. Auf diese Weise kann in einfacher Weise verhindert werden, dass bei Einwirken einer Druckkraft auf das Entkopplungselement dieses nach innen in das Gehäuse des Ultraschallsensors eingedrückt werden kann.

Ferner ist es vorteilhaft, wenn an dem Entkopplungselement mindestens ein Hinterschnittbereich ausgebildet ist, in den die Membran rastend einsetzbar ist. Da das Entkopplungselement, wie weiter oben bereits erläutert, durch einen separaten Spritzgussvorgang hergestellt werden kann, können die entstehenden konstruktionstechnischen Freiheiten genutzt werden, um das Entkopplungselement mit Geometrien zu versehen, die bei einer Herstellung des Entkopplungselements durch Umspritzen anderer Bauteile nicht möglich wäre. Da das Entkopplungselement üblicherweise aus einem elastischen Material gebildet ist, können Hinterschnittbereiche auch hergestellt werden, ohne dass dabei die Verwendung von Schieberwerkzeugen erforderlich ist. In einem solchermaßen hergestellten Hinterschnittbereich kann die Membran rastend eingesetzt werden, so dass diese sicher innerhalb des Entkopplungselements gehalten ist.

Besonders kompakt baut das Entkopplungselement dabei, wenn der Hinterschnittbereich zumindest abschnittsweise durch das Anschlagelement begrenzt ist. Das Anschlagelement bildet also zugleich einen Materialabschnitt, der der Fixierung der Membran innerhalb des Entkopplungselements dient.

Eine besonders vorteilhafte Weiterbildung der Erfindung sieht vor, dass das Entkopplungselement auf seiner der Membran zugewandten Seite mindestens eine Materialausnehmung aufweist. Eine solche Materialausnehmung kann beispielsweise taschenförmig ausgebildet sein und schafft bei Montage der Membran innerhalb des Entkopplungselements einen Luftraum, der eine Übertragung von Schwingungen von dem Membran über das Entkopplungselement auf den Gehäuseabschnitt des Gehäuses und in entgegengesetzter Richtung zurück zur Membran unterbindet.

Dabei kann eine besonders vorteilhafte Entkopplungswirkung erreicht werden, wenn die Materialausnehmung in radialer Richtung mit einem Randabschnitt der Membran fluchtet, der die Membran in radialer Richtung verstärkt. Eine schwingungstechnische Entkopplung in diesem Bereich bewirkt eine deutliche Verbesserung des Messverhaltens des Ultraschallsensors.

Weiterhin wird vorgeschlagen, dass das Entkopplungselement in das Gehäuse des Ultraschallsensors ragende Hinterschnittelemente aufweist, die von einem den Innenraum des Gehäuses ausfüllenden Vergussmaterial umgeben sind. Auf diese Weise kann ein fast vollständig montierter Ultraschallsensor in an sich bekannter Weise mit Vergussmaterial ausgefüllt werden, wodurch das Entkopplungselement nach dem Einbringen des vergussmaterials verliersicher relativ zu dem Gehäuse fixiert ist.

Als besonders gut geeignet für das Material des Entkopplungselements hat sich Flüssigsilikonkautschuk (LSR) herausgestellt. Dieses Material weist über einen großen Temperaturbereich hinweg weitestgehend konstante mechanische Eigenschaften und somit auch ein weitestgehend konstantes Schwingungsverhalten auf.

Die Erfindung betrifft ferner gemäß Anspruch 13 ein Verfahren zur Montage eines Ultraschallsensors, das sich durch die folgenden Schritte kennzeichnet: Es wird zunächst eine erste Baugruppe gebildet, in der ein Piezo-Element an dem Membranboden einer Membran befestigt wird. Diese erste Baugruppe wird insbesondere rastend in ein Entkopplungselement eingesetzt, um eine zweite Baugruppe zu bilden. Diese Baugruppe wird wiederum zur Bildung einer dritten Baugruppe rastend in einen Gehäuseabschnitt eines Gehäuses des Ultraschallsensors eingesetzt. Auf diese Weise ist es möglich, vergleichsweise kritische Montagevorgänge, wie beispielsweise die Befestigung des Piezo-Elements an dem Membranboden, auf eine kleine Baugruppe zu beschränken. Durch die miteinander rastende Montage der einzelnen Bauteile des Ultraschallsensors lässt sich die Herstellung des Ultraschallsensors auch besonders gut automatisieren.

In besonders vorteilhafter Weise wird das Entkopplungselement dabei in einer Montagerichtung in den Gehäuseabschnitt eingesetzt, die zur Abstrahlrichtung des Ultraschallsensors entgegengesetzt ist. Auf diese Weise muss das Entkopplungselement nicht durch das gesamte Gehäuse des Ultraschallsensors hindurchgeführt werden, sondern kann über einen kurzen und günstigeren Fügeweg mit dem Gehäuseabschnitt verbunden werden.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung gezeigten sowie in den Ansprüchen sowie in der Beschreibung erwähnten Merkmale jeweils einzeln für sich oder in beliebiger Kombination erfindungswesentlich sein.

In der Zeichnung zeigen:
- Figur 1: eine Seitenansicht eines erfindungsgemäßen Ultraschallsensors mit einem Entkopplungselement;
- Figur 2: eine geschnittene Seitenansicht des Ultraschallsensors gemäß Figur 1;
- Figur 3: eine perspektivische Ansichten eines Entkopplungselements des Ultraschallsensors gemäß Figuren 1 und 2;
- Figur 4: eine perspektivische Ansichten eines weiteren Entkopplungselements;
- Figur 5: eine geschnittene Seitenansicht einer weiteren Ausführungsform eines erfindungsgemäßen Ultraschallsensors.

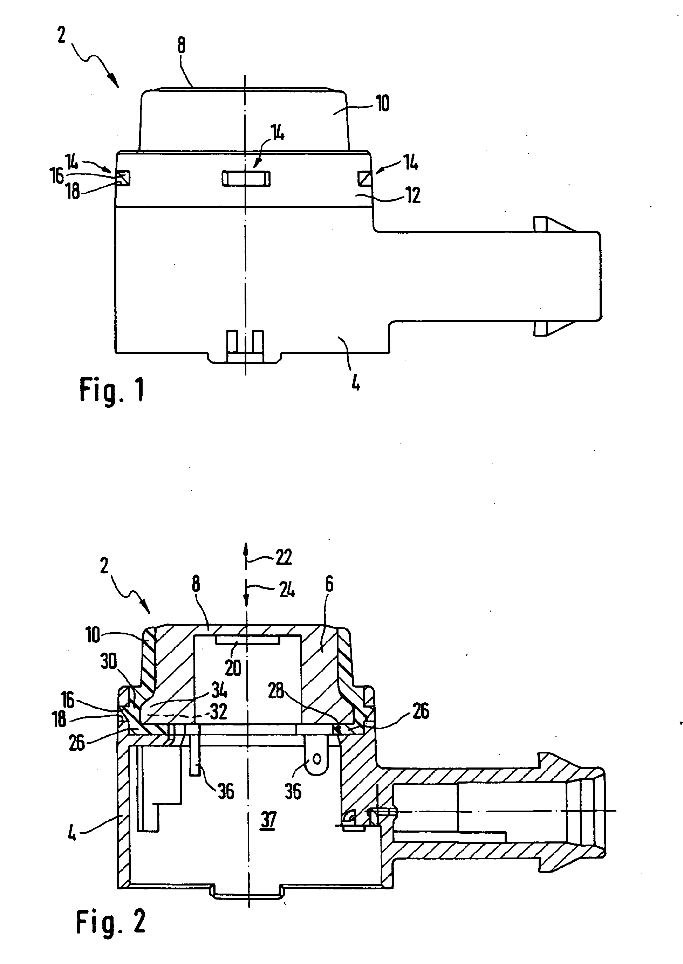

In Figur 1 ist ein Ultraschallsensor insgesamt mit dem Bezugszeichen 2 bezeichnet. Dieses weist ein in etwa topfförmiges Gehäuse 4 auf (vgl. auch Figur 2). An dem Gehäuse 4 ist eine im Wesentlichen zylindrisch ausgebildete Membran 6 gelagert, die einen scheibenförmigen Membranboden 8 aufweist. Die Membran 6 ist radial außen von einem ringförmigen Entkopplungselement 10 umgeben, das die Membran 6 schwingungstechnisch von dem Gehäuse 4 entkoppelt. Das Entkopplungselement 10 ist gehäuseseitig an einem ringförmigen Gehäuseabschnitt 12 gelagert, der einen dem Gehäuse 4 zugewandten Teil des Entkopplungselement 10 radial außen umgibt.

Das Entkopplungselement 10 und der Gehäuseabschnitt 12 sind über Rastmittel 14 miteinander verbunden, die über den Umfang des Gehäuseabschnitts 12 beziehungsweise des in Figuren 1 und 2 unteren Teils des Entkopplungselements 10 verteilt sind. Die Rastmittel 14 umfassen Rastkörper 16, die gemäß dem dargestellten Ausführungsbeispiel an dem Entkopplungselement 10 vorgesehen sind, sowie Rastaufnahmen 18, die durch Öffnungen in dem Gehäuseabschnitt 12 gebildet sind.

Mit Bezug auf Figur 2 weist die Membran 6 an der Unterseite des Membranbodens 8 ein Piezo-Element 20 auf, das den Membranboden 8 in Schwingung versetzen kann, so dass dieser Ultraschallsignale entsprechend einer mit 22 bezeichneten Abstrahlrichtung erzeugen kann. Zu dieser Richtung entgegengesetzt kann in einer Montagerichtung 24 eine aus Membran 6 und Piezo-Element 20 gebildete Baugruppe in das Entkopplungselement 10 eingesetzt werden. Das Entkopplungselement ist aus Flüssigsilikonkautschuk (LSR, Liquid Silicone Rubber) gebildet. Es ist daher elastisch, so dass es sich beim Einsetzen der Membran 6 entsprechend der Montagerichtung 24 in das Entkopplungselement 10 verformen und nach Abschluss des Montagevorgangs die Membran 6 sicher halten kann.

Die solchermaßen gebildete Baugruppe, bestehend aus Membran 6 und dem Entkopplungselement 10 kann wiederum entsprechend der Montagerichtung 24 mit dem Gehäuse 4 des Ultraschallsensors 2 gefügt werden. Hierbei rasten die Rastkörper 16 des Entkopplungselements 10 in den Rastaufnahmen 18 des Gehäuseabschnitts 12 ein.

Das Entkopplungselement 10 weist auf seiner dem Gehäuse 4 zugewandten Seite entlang des Umfangs des Entkopplungselements 10 verteilte Anschlagelemente 26 auf. Diese Anschlagelemente 26 wirken mit in dem Gehäuse 4 ausgebildeten Anschlagflächen 28 zusammen, so dass die Montageposition des Entkopplungselements 10 innerhalb des Gehäuses 4 beziehungsweise des Gehäuseabschnitts 12 nicht nur durch die Rastmittel 14, sondern auch durch den Kontakt zwischen Anschlagelementen 26 und Anschlagflächen 28 definiert ist.

Die Anschlagelemente 26 bilden gemeinsam mit einem sich anschließenden ringförmigen Wandabschnitt 30 des Entkopplungselements 10 Hinterschnittbereiche 32, in denen ein die Membran 6 in radialer Richtung verstärkender Randabschnitt 34 aufgenommen ist. Auf diese Weise ist die Membran 6 sicher innerhalb des Entkopplungselements 10 fixiert.

Das Entkopplungselement 10 weist ferner dem Gehäuse 4 zugewandte Hinterschnittelemente 36 auf, die beispielsweise als Laschen oder Ösen ausgebildet sein können. Wenn ein Innenraum 37 des Gehäuses 4 mit Vergussmaterial aufgefüllt wird, um den Ultraschallsensor 2 und dessen elektrische Bauteile vor Feuchtigkeit und vor Schmutz zu schützen, umgibt das Vergussmaterial die Hinterschnittelemente 36, so dass das Entkopplungselement 10 sicher relativ an dem Gehäuse 4 fixiert ist.

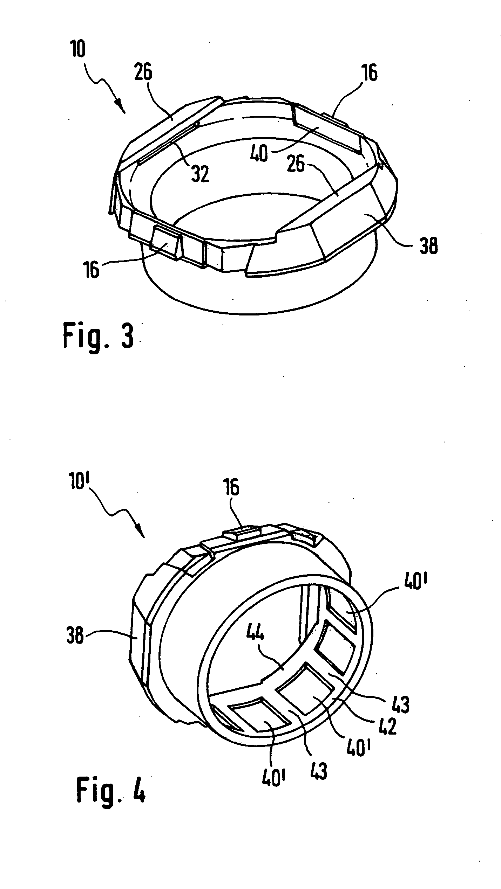

Das Entkopplungselement 10 ist auch in Figur 3 dargestellt, wobei die Perspektive so gewählt ist, dass die Anschlagelemente 26 in Figur 3 oben liegen. Benachbart zu den Anschlagelementen 26 weist das Entkopplungselement 10 einen sich in Richtung auf das Anschlagelement 26 verjüngenden Einführabschnitt 38 auf, der das Einführen des Entkopplungselements 10 in den Gehäuseabschnitt 12 des Gehäuses 4 erleichtert.

Das Entkopplungselement 10 weist ferner entlang des Umfangs des Entkopplungselements 10 verteilte taschenförmige Materialausnehmungen 40 auf. Diese Materialausnehmungen dienen dazu, das Entkopplungselement 10 schwingungstechnisch von der Membran 6 zu entkoppeln, so dass Schwingungen von der Membran 6 nicht über das Entkopplungselement 10 in den Gehäuseabschnitt 12 und somit auf das Gehäuse 4 übertragen werden können.

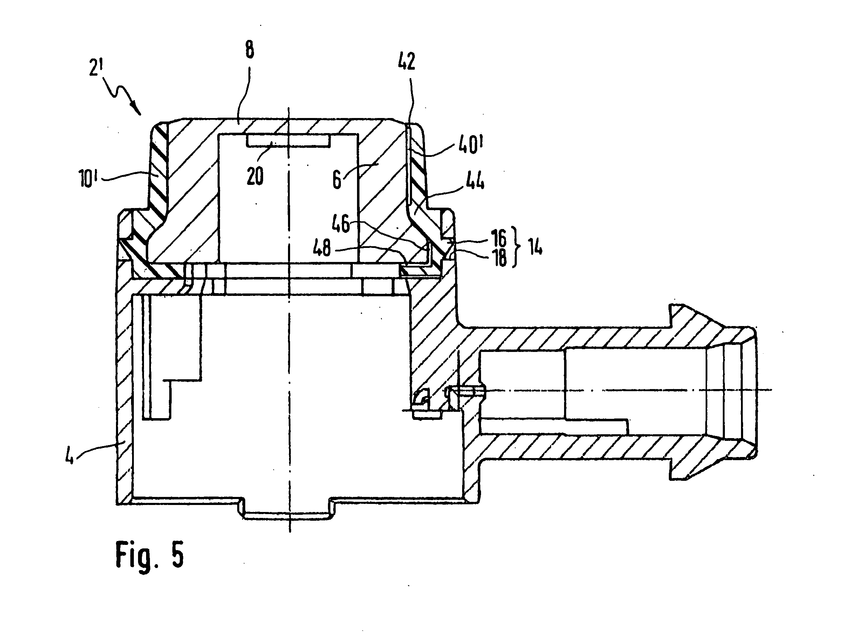

Das in Figur 4 dargestellte weitere Entkopplungselement 10' weist taschenförmige Materialausnehmungen 40 auf, die gemäß Figur 4 nach vorne hin und bei Anordnung in einem Ultraschallsensor 2' (vergleiche Figur 5) benachbart zu dem Membranboden 8 durch einen Ringabschnitt 42 begrenzt sind. In Umfangsrichtung sind die einzelnen Materialausnehmungen 40' durch Materialstege 43 begrenzt. Ferner sind die Materialausnehmungen 40' durch einen dem Randabschnitt 42 gegenüberliegenden Randabschnitt 44 begrenzt.

Die Lage der Materialausnehmungen 40' geht auch aus der in Figur 5 dargestellten Schnittansicht, in der das Entkopplungselement 10' in dem Ultraschallsensor 2' montiert ist, hervor. Das Entkopplungselement 10' weist neben den Materialausnehmungen 40' weitere Materialausnehmungen 46 und 48 auf. Die Materialausnehmungen 46 sind gegenüber der Membran 6 nach radial außen eingerückt. Die Materialausnehmungen 48 entkoppeln die Membran 6 von dem Gehäuse 4 in axialer Richtung.

## Patentansprüche

1. Ultraschallsensor (2), insbesondere Kraftfahrzeug-Ultraschallsensor, mit einem Gehäuse (4), mit einer in oder an einem Abschnitt (12) des Gehäuses (4) gelagerten Membran (6), und mit einem Entkopplungselement (10), das sich zumindest abschnittsweise zwischen der Membran (6) und dem Gehäuseabschnitt (12) erstreckt, wobei das Entkopplungselement (10) und der Gehäuseabschnitt (12) Rastmittel (14) aufweisen, über die das Entkopplungselement (10) und der Gehäuseabschnitt (12) miteinander verbunden sind, **dadurch gekennzeichnet, dass** entlang des Umfangs des Gehäuseabschnitts (12) und des Entkopplungselements (10) mehrere Rastmittel (14) vorgesehen sind, wobei die Rastmittel (14) an dem Entkopplungselement (10) vorgesehene Rastkörper (16) sowie Rastaufnahmen (18) umfassen, welche durch Öffnungen in dem Gehäuseabschnitt (12) gebildet sind.

2. Ultraschallsensor (2) nach Anspruch 1, **dadurch gekennzeichnet, dass** der Gehäuseabschnitt (12) und das Entkopplungselement (10) ringförmig ausgebildet sind.

3. Ultraschallsensor (2) nach Anspruch 1, **dadurch gekennzeichnet, dass** die Rastmittel (14) gleichmäßig entlang des Umfangs des Gehäuseabschnitts (12) und des Entkopplungselements (10) verteilt sind.

4. Ultraschallsensor (2) nach mindestens einem der vorhergehenden Ansprüche, **dadurch gekennzeichnet, dass** das Entkopplungselement (10) in einer Montagerichtung (24) in den Gehäuseabschnitt (12) einsetzbar ist, die zur Abstrahlrichtung (22) des Ultraschallsensors (2) entgegengesetzt ist.

5. Ultraschallsensor (2) nach Anspruch 4, **dadurch gekennzeichnet, dass** das Entkopplungselement (10) und/oder der Gehäuseabschnitt (12) mindestens einen sich relativ zur Montagerichtung (24) verjüngenden Einführabschnitt (38) aufweist.

6. Ultraschallsensor (2) nach mindestens einem der vorhergehenden Ansprüche, **dadurch gekennzeichnet, dass** an dem Entkopplungselement (10) mindestens ein Anschlagelement (26) ausgebildet ist, das mit einer an dem Gehäuse (4) oder dem Gehäuseabschnitt (12) ausgebildeten Anschlagfläche (28) zusammenwirkt.

7. Ultraschallsensor (2) nach mindestens einem der vorhergehenden Ansprüche, **dadurch gekennzeichnet, dass** an dem Entkopplungselement (10) mindestens ein Hinterschnittbereich (32) ausgebildet ist, in den die Membran (6) rastend einsetzbar ist.

8. Ultraschallsensor (2) nach Anspruch 7, **dadurch gekennzeichnet, dass** der Hinterschnittbereich (32) zumindest abschnittsweise durch das Anschlagelement (26) begrenzt ist.

9. Ultraschallsensor (2) nach mindestens einem der vorhergehenden Ansprüche, **dadurch gekennzeichnet, dass** das Entkopplungselement (10) auf seiner der Membran (6) zugewandten Seite mindestens eine Materialausnehmung (40, 40', 46, 48) aufweist.

10. Ultraschallsensor (2) nach Anspruch 8, **dadurch gekennzeichnet, dass** die Materialausnehmung (40, 40', 46, 48) in radialer Richtung mit einem Randabschnitt (34) der Membran (6) fluchtet, der die Membran (6) in radialer Richtung verstärkt.

11. Ultraschallsensor (2) nach mindestens einem der vorhergehenden Ansprüche, **dadurch gekennzeichnet, dass** das Entkopplungselement (10) in das Gehäuse (4) des Ultraschallsensors (2) ragende Hinterschnittelemente (36) aufweist, die von einem den Innenraum (37) des Gehäuses (4) ausfüllenden Vergussmaterial umgeben sind.

12. Ultraschallsensor (2) nach mindestens einem der vorhergehenden Ansprüche, **dadurch gekennzeichnet, dass** das Entkopplungselement (10) aus Flüssigsilikonkautschuk (LSR) gebildet ist.

13. Verfahren zur Montage eines Ultraschallsensors (2), nach mindestens einem der vorhergehenden Ansprüche, **gekennzeichnet durch** die folgenden Schritte: es wird eine erste Baugruppe gebildet, indem ein Piezo-Element (20) an dem Membranboden (8) einer Membran (6) befestigt wird; die erste Baugruppe wird zur Bildung einer zweiten Baugruppe in ein Entkopplungselement (10) eingesetzt; die zweite Baugruppe wird zur Bildung einer dritten Baugruppe rastend in einen Gehäuseabschnitt (12) eines Gehäuses (4) des Ultraschallsensors (2) eingesetzt.

14. Verfahren nach Anspruch 13, **dadurch gekennzeichnet, dass** die erste Baugruppe rastend in das Entkopplungselement (10) eingesetzt wird.

15. Verfahren nach Anspruch 13 oder 14, **dadurch gekennzeichnet, dass** das Entkopplungselement (10) in einer Montagerichtung (24) in den Gehäuseabschnitt (12) eingesetzt wird, die zur Abstrahlrichtung (22) des Ultraschallsensors (2) entgegengesetzt ist.

## Claims

1. Ultrasound sensor (2), in particular motor vehicle ultrasound sensor, having a housing (4), having a diaphragm (6) which is mounted in or on a section (12) of the housing (4), and having a decoupling element (10) which extends at least partially between the diaphragm (6) and the housing section (12), the decoupling element (10) and the housing section (12) having latching means (14) via which the decoupling element (10) and the housing section (12) are connected to one another, **characterized in that** a plurality of latching means (14) are provided along the circumference of the housing section (12) and of the decoupling element (10), the latching means (14) comprising latching bodies (16) provided on the decoupling element (10) and also latching receptacles (18) which are formed by openings in the housing section (12).

2. Ultrasound sensor (2) according to Claim 1, **characterized in that** the housing section (12) and the decoupling element (10) are embodied in an annular shape.

3. Ultrasound sensor (2) according to Claim 1, **characterized in that** the latching means (14) are distributed uniformly along the circumference of the housing section (12) and of the decoupling element (10).

4. Ultrasound sensor (2) according to at least one of the preceding claims, **characterized in that** the decoupling element (10) can be inserted into the housing section (12) in a mounting direction (24) which is opposed to the irradiation direction (22) of the ultrasound sensor (2).

5. Ultrasound sensor (2) according to Claim 4, **characterized in that** the decoupling element (10) and/or the housing section (12) have at least one insertion section (38) which tapers in relation to the mounting direction (24).

6. Ultrasound sensor (2) according to at least one of the preceding claims, **characterized in that** at least one stop element (26), which interacts with a stop face (28) which is formed on the housing (4) or on the housing section (12), is formed on the decoupling element (10).

7. Ultrasound sensor (2) according to at least one of the preceding claims, **characterized in that** at least one undercut region (32) into which the diaphragm (6) can be inserted in a latching fashion is formed on the decoupling element (10).

8. Ultrasound sensor (2) according to Claim 7, **characterized in that** the undercut region (32) is bounded at least partially by the stop element (26).

9. Ultrasound sensor (2) according to at least one of the preceding claims, **characterized in that** the decoupling element (10) has at least one material cutout (40, 40', 46, 48) on its side facing the diaphragm (6).

10. Ultrasound sensor (2) according to Claim 8, **characterized in that** the material cutout (40, 40', 46, 48) is aligned in the radial direction with an edge section (34) of the diaphragm (6), which edge section (34) reinforces the diaphragm (6) in the radial direction.

11. Ultrasound sensor (2) according to at least one of the preceding claims, **characterized in that** the decoupling element (10) has undercut elements (36) which project into the housing (4) of the ultrasound sensor (2) and are surrounded by an embedding material which fills the interior (37) of the housing (4).

12. Ultrasound sensor (2) according to at least one of the preceding claims, **characterized in that** the decoupling element (10) is formed from liquid silicone rubber (LSR).

13. Method for mounting an ultrasound sensor (2) according to at least one of the preceding claims, **characterized by** the following steps: a first assembly is formed by attaching a piezo element (20) to the diaphragm floor (8) of a diaphragm (6), the first assembly is inserted into a decoupling element (10) in order to form a second assembly, and the second assembly is used to form a third assembly by latching into a housing section (12) of a housing (4) of the ultrasound sensor (2).

14. Method according to Claim 13, **characterized in that** the first assembly is inserted into the decoupling element (10) in a latching fashion.

15. Method according to Claim 13 or 14, **characterized in that** the decoupling element (10) is inserted into the housing section (12) in a mounting direction (24) which is opposed to the irradiation direction (22) of the ultrasound sensor (2).

## Revendications

1. Capteur à ultrasons (2), notamment capteur à ultrasons de véhicule automobile, avec un boîtier (4), avec une membrane (6) disposée dans ou contre un segment (12) du boîtier (4) et avec un élément de débrayage (10) qui s'étend au moins sur une partie de segment entre la membrane (6) et le segment de boîtier (12), l'élément de débrayage (10) et le segment de boîtier (12) comportant des moyens d'arrêt (14) via lesquels l'élément de débrayage (10) et le segment de boîtier (12) sont reliés entre eux, **caractérisé en ce que** plusieurs moyens d'arrêt (14) sont prévus le long du périmètre du segment de boîtier (12) et de l'élément de débrayage (10), les moyens d'arrêt (14) comprenant des corps d'arrêt (16) prévus contre l'élément de débrayage (10) ainsi que des logements d'arrêt (18) formés à travers les ouvertures dans le segment de boîtier (12).

2. Capteur à ultrasons (2) selon la revendication 1, **caractérisé en ce que** le segment de boîtier (12) et l'élément de débrayage (10) prennent une forme annulaire.

3. Capteur à ultrasons (2) selon la revendication 1, **caractérisé en ce que** les moyens d'arrêt (14) sont répartis régulièrement le long du périmètre du segment de boîtier (12) et de l'élément de débrayage (10).

4. Capteur à ultrasons (2) selon au moins l'une quelconque des revendications précédentes, **caractérisé en ce que** l'élément de débrayage (10) peut être inséré dans le segment de boîtier (12) dans une direction de montage (24) opposée à la direction de rayonnement (22) du capteur à ultrasons (2).

5. Capteur à ultrasons (2) selon la revendication 4, **caractérisé en ce que** l'élément de débrayage (10) et/ou le segment de boîtier (12) comportent au moins un segment d'introduction (38) se rétrécissant par rapport à la direction de montage (24).

6. Capteur à ultrasons (2) selon au moins l'une quelconque des revendications précédentes, **caractérisé en ce qu'**au moins un élément de butée (26) est formé au niveau de l'élément de débrayage (10), ledit élément interagissant avec une surface de butée (28) formée contre le boîtier (4) ou le segment de boîtier (12).

7. Capteur à ultrasons (2) selon au moins l'une quelconque des revendications précédentes, **caractérisé en ce qu'**au moins une zone de détouré (32) est réalisée contre l'élément de débrayage (10), dans laquelle la membrane (6) peut être insérée de façon encliquetable.

8. Capteur à ultrasons (2) selon la revendication 7, **caractérisé en ce que** la zone de détouré (32) est délimitée au moins sur une partie de segment par l'élément de butée (26).

9. Capteur à ultrasons (2) selon au moins l'une quelconque des revendications précédentes, **caractérisé en ce que** l'élément de débrayage (10) comporte au moins un évidement de matériau (40, 40', 46, 48) sur son côté orienté vers la membrane (6).

10. Capteur à ultrasons (2) selon la revendication 8, **caractérisé en ce que** l'évidement de matériau (40, 40', 46, 48) s'aligne dans la direction radiale avec un segment de bordure (34) de la membrane (6) qui renforce la membrane (6) dans la direction radiale.

11. Capteur à ultrasons (2) selon au moins l'une quelconque des revendications précédentes, **caractérisé en ce que** l'élément de débrayage (10) comporte dans le boîtier (4) du capteur à ultrasons (2) des éléments de détouré (36) saillants entourés par un matériau de scellement remplissant l'espace intérieur (37) du boîtier (4).

12. Capteur à ultrasons (2) selon au moins l'une quelconque des revendications précédentes, **caractérisé en ce que** l'élément de débrayage (10) est formé d'un caoutchouc en silicone fluide (LSR).

13. Procédé de montage d'un capteur à ultrasons (2) selon au moins l'une quelconque des revendications précédentes, **caractérisé par** les étapes suivantes : un premier groupe modulaire est formé dans lequel un élément piézoélectrique (20) est fixé au fond de membrane (8) d'une membrane (6) ; le premier groupe modulaire est utilisé pour former un deuxième groupe modulaire dans un élément de débrayage (10) ; le deuxième groupe modulaire est utilisé pour forme un troisième groupe modulaire s'encliquetant dans un segment de boîtier (12) d'un boîtier (4) du capteur à ultrasons (2).

14. Procédé selon la revendication 13, **caractérisé en ce que** le premier groupe modulaire est inséré de façon à s'encliqueter dans l'élément de débrayage (10).

15. Procédé selon la revendication 13 ou 14,
**caractérisé en ce que** l'élément de débrayage (10) est inséré dans une direction de montage (24) dans le segment de boîtier (12), ladite direction étant opposée à la direction de rayonnement (22) du capteur à ultrasons (2).
